# EUROPÄISCHE PATENTSCHRIFT

(11) **EP 1 210 873 B1**
(45) Veröffentlichungstag und Bekanntmachung des Hinweises auf die Patenterteilung: **15.12.2004**
(21) Anmeldenummer: 01127093.1
(22) Anmeldetag: 15.11.2001
(51) Int. Cl.: A01K 13/00, A01L 3/00, A01L 3/06, A01L 7/00

(54) **Hufschuh**
Horseshoe
Chaussure pour cheval

(30) Priorität: 27.11.2000 AT 2000869 U
(43) Veröffentlichungstag der Anmeldung: 05.06.2002
(73) Patentinhaber: PKT Präzisionskunststofftechnik Bürtlmair GmbH, 4550 Kremsmünster (AT)
(72) Erfinder: Bürtlmair, Hermann, 4550 Kremsmünster (AT); Wittmann, Heinz, 1100 Wien (AT)
(74) Vertreter: Vinazzer, Edith, Dipl.-Ing.

(56) Entgegenhaltungen:
- EP-A- 1 008 295
- WO-A-86/03936
- US-A- 1 496 511
- US-A- 4 185 695

## Beschreibung

Die Erfindung betrifft einen Hufschuh für den Huf eines Tieres, insbesondere eines Pferdes, mit einer Schale mit einer austauschbaren Sohle und mit einem zum Anlegen des Hufschuhs weg bewegbaren Teil, welches mittels zumindest eines Zugelementes an der Schale festlegbar ist und welches eine in der anatomischen Einbuchtung oberhalb des Hufes positionierbare Polsterung aufweist.

Ein Hufschuh der eingangs genannten Art ist aus der EP-A2-1 008 295 bekannt. Das zum Anlegen des Hufschuhs weg bewegbare Teil ist dabei eine am vorderen Bereich der Schale weg klappbar angeordnete Lasche, durch welche ein Band durchgezogen ist, welches mit seinem einen Ende an einem an der Wand der Schale angebrachten Haltelement einhängbar ist. Das andere Ende des Bandes ist mit einer Rasterung versehen und in eine Schnalle einschiebbar, sodass durch ein Schließen der Schnalle das Band fixiert werden kann. An der Innenseite der Schale ist ein aufblasbares, schlauchförmiges Element angeordnet, welches eine Anpassung des Hufschuhs an den Huf und einen vertikalen Halt des Hufes im Hufschuh gewährleisten soll. Die rückwärtig und seitlich geschlossene Schale mit dem nach dem Anlegen aufzublasenden Luftpolster gestaltet das Hantieren mit dem Hufschuh beim Anlegen umständlich. Das Aufblasen des Luftpolsters erfordert eine Luftpumpe, die, wenn sie nicht vorhanden ist, den Hufschuh unbrauchbar macht. Problematisch ist bei dem bekannten Luftschuh in jedem Fall das aufgeblasene Element, welches unter Fremdeinwirkung, beispielsweise durch spitze Steine, Geäst etc. oder in Folge von Materialermüdung, die für seine Funktion notwendige Luft verlieren kann, wodurch der Hufschuh keinen Halt mehr bietet.

Die WO-A-86/03936 offenbart einen Hufschuh, dessen Zugelemente von zwei einander im rückwärtigen Bereich des Hufschuhs kreuzenden Gurten gebildet sind, welche in Schlingen eingehakt sind, die an der Vorderseite des Hufschuhs an einer Sperrvorrichtung befestigbar sind. Durch einen Drehknopf wird ein Spannen der Gurten ermöglicht. Der Schließ- und Spannmechanismus erfordert ein umständliches Hantieren und ist mit der Gefahr eines zu festen oder zu geringen Spannens verbunden. Zu fest gespannte Gurte sind für das Tier unangenehm, zu locker gespannte Gurte können zu einem Verlieren des Hufschuhs führen.

Der Erfindung liegt nun die Aufgabe zu Grunde, einen Hufschuh der eingangs genannten Art derart zu gestalten, dass er leicht angelegt werden kann und bei einer optimalen Passform einen sicheren Halt für den Huf des Tieres unter allen Gegebenheiten sicherstellt.

Gelöst wird die gestellte Aufgabe erfindungsgemäß dadurch, dass das oder zumindest eines der Zugelement(e) federnd ausgeführt ist und / oder an der Schale auf gefederte Weise geführt und / oder festlegbar ist.

Ein erfindungsgemäß ausgeführter Hufschuh gewährleistet durch das bzw. die federnd ausgeführte oder festlegbare(n) Zugelement(e) einen sehr guten und sicheren Halt des Hufes ohne ein Lockern der Zugelemente während des Gebrauches befürchten zu müssen.

Um ein korrektes Spannen des bzw. der Zugelemente sicherstellen zu können, ist es von Vorteil, wenn die Vorspannung desselben bzw. derselben an einer Einstellskala mittels Zahlen, Symbolen, Farben etc. ablesbar ist.

Bei einer bevorzugten Ausführungsformen der Erfindung ist das Zugelement mit zumindest einem federnden Element verbunden oder es weist zumindest einen federnden Abschnitt auf. Diese Zugelemente sind besonders einfach und gleichzeitig sehr funktionssicher ausführbar

Von besonderen Vorteil ist es, wenn das federnde Element oder der federnde Abschnitt des Zugelements eine progressiv ansteigende Federcharakteristik aufweist. Dieser Ausführung ist für das Tier besonders schonend und komfortabel und gewährleistet gleichzeitig den erforderlichen Halt des Hufschuhs am Huf.

Diese Federcharakteristik des Zugelements lässt sich auf einfache Weise dadurch realisieren, dass der federnde Abschnitt des Zugelements zumindest ein kurzes, insbesondere federndes, Segment und zumindest ein weiteres, neben oder über diesem angeordnetes, längeres und nicht bzw. nur geringfügig federndes Segment aufweist.

Bei einer weiteren Ausführungsvariante kann zumindest einer der Endbereiche des Zugelements unter Zwischenschaltung einer in ihrer Vorspannung veränderbaren Feder festlegbar sein.

Eine weitere Maßnahme, die einen sicheren Halt des Hufes im Hufschuh und gleichzeitig auch die federnde Anordnung des Zugelements unterstützen kann, besteht darin, dass das Zugelement zumindest an der einen Seite der Schale bzw. des Formteiles über zumindest ein, insbesondere federnd befestigtes oder ausgeführtes Umlenkelement führbar ist.

Das Zugelement kann durch ein die Polsterung bildendes oder aufweisendes Formteil geführt sein oder, zweiteilig ausgeführt, am Formteil befestigt sein oder ein Federelement aufweisen, welches insbesondere innerhalb des Formteiles verläuft. Bei diesen Varianten kann auf einfache Weise die Austauschbarkeit des die Polsterung bildenden Formteils, gegebenenfalls mitsamt Zugelement(en), sichergestellt werden.

Um die Belastungen für den Hufbereich des Tieres durch den Hufschuh möglichst gering zu halten und eine optimale Passform zu unterstützen, ist es weiters von Vorteil, wenn das die Polsterung bildende Formteil gemeinsam mit zwei seitlich vorne an der Innenseite der Schale angeordneten, insbesondere aus elastischem Material bestehenden und rippen- oder polsterförmig ausgeführten Auflagen eine Art 3-Punkt-Auflage für den Huf bildet.

Ein guter Halt des Hufes im Hufschuh kann auch durch die Spannrichtung des Zugelements beeinflusst werden. Diesbezüglich ist es von Vorteil, wenn das Zugelement zumindest einseitig für ein Spannen nach vorne und nach unten bzw. schräg nach vorne und nach unten geführt ist.

Eine erste grobe Einstellung der Länge des Zugelements und somit der Anpassung an den betreffenden Huf wird dadurch ermöglicht, dass zumindest eines der Enden des Zugelements in unterschiedlichen Positionen an der Schale festlegbar, beispielsweise einhängbar, ist.

Weitere Merkmale, Vorteile und Einzelheiten der Erfindung werden nun anhand der Zeichnung, die schematisch mehrere Ausführungsbeispiele darstellt, näher beschrieben. Dabei zeigen
Fig. 1 eine Seitenansicht einer ersten Ausführungsform eines erfindungsgemäß ausgeführten, für einen Pferdehuf geeigneten Hufschuhs,
Fig. 2 eine Draufsicht auf den Hufschuh aus Fig. 1,
Fig. 3 eine Seitenansicht einer weiteren Ausführungsform eines erfindungsgemäß ausgeführten Hufschuhs für einen Pferdehuf,
Fig. 4 eine Draufsicht auf eine noch weitere Ausführungsform eines Hufschuhs und
Fig. 5 eine Seitenansicht eines Pferdehufes mit einem Hufschuh, welcher gemäß Fig. 1 und 2 ausgeführt ist, und
Fig. 6 und Fig. 7 Ausführungsvariationen von Zugelementen.

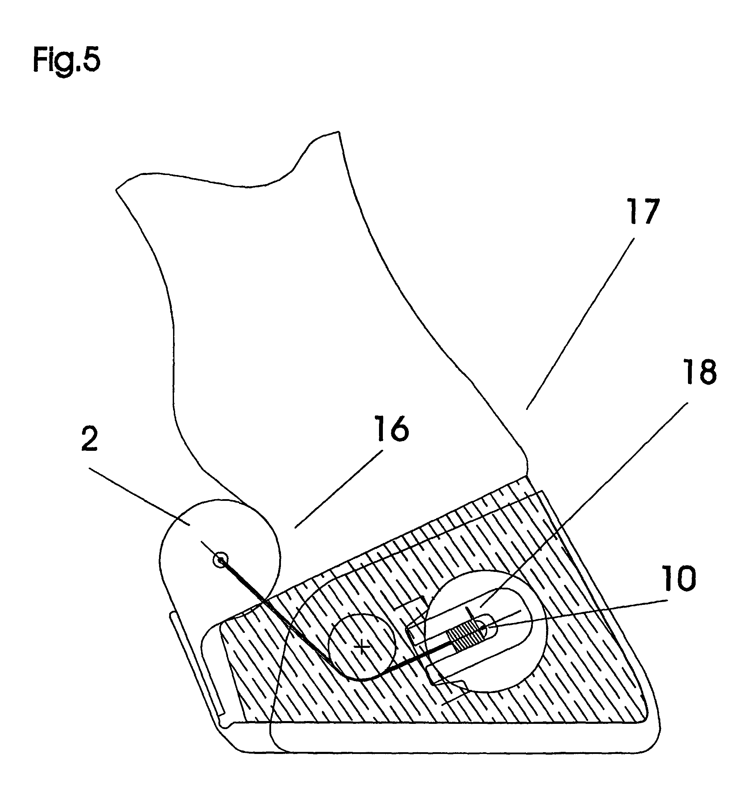

Ein Hauptbestandteil des in sämtlichen Figuren dargestellten Hufschuhs ist eine den vorderen Bereich und die beiden Seitenbereiche des Hufes aufnehmende bzw. umfassende Schale 1, die mit einem Bodenteil 5 versehen ist. Die Schale 1 und das Bodenteil 5 bestehen aus einem geeigneten Kunststoffmaterial, beispielsweise aus Polyurethan, und sind stabil ausgeführte Teile. Das Bodenteil 5 ist mit der Schale 1 einteilig ausgeführt und kann auf nicht gezeigte Weise mit einer auswechselbaren Sohle versehen sein. Am rückwärtigen Rand des Bodenteils 5 ist über eine als Filmscharnier wirkende Materialverjüngung 7 eine Rückwand 6 schwenkbar bzw. klappbar angeordnet. An der Rückwand 6 ist ein elastisches Formteil 2, welches, wie Fig. 5 zeigt, als Stützpolster der natürlichen Einbuchtung 16 oberhalb des Ballens eines Hufes 17 eines Pferdes weitgehend angepasst ist, befestigt. Das elastische Formteil 2 besteht insbesondere aus einem geschäumten Kunststoff.

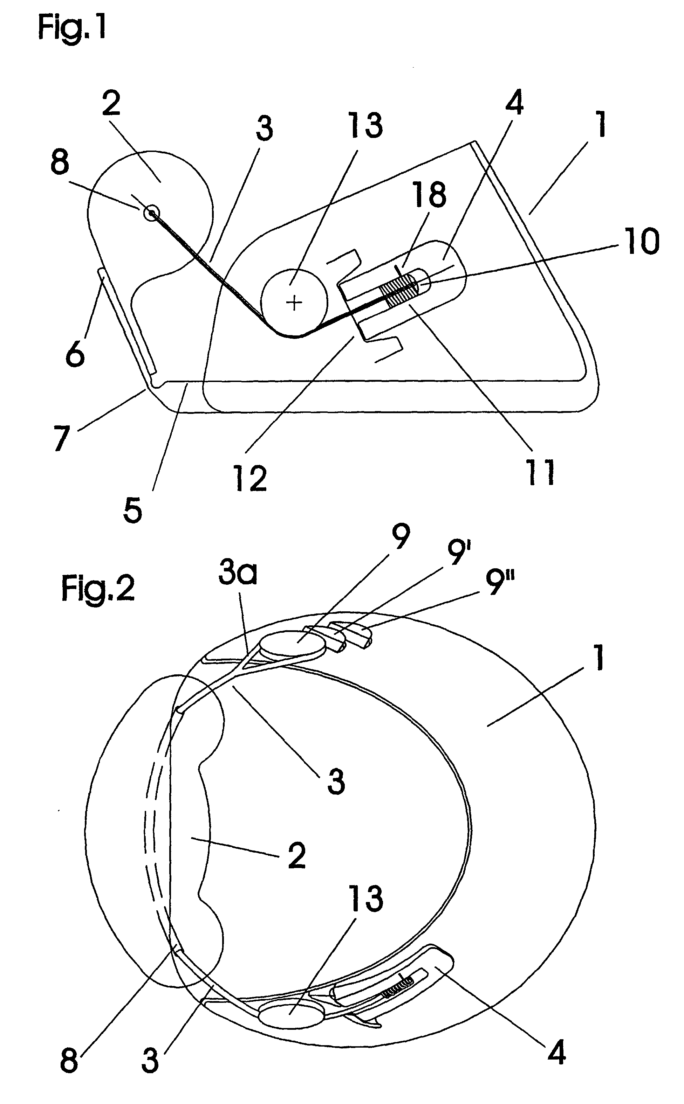

Wie insbesondere Fig. 2 zeigt, ist etwa mittig durch das elastische Formteil 2 ein elastischer Schlauch 8 durchgeführt, welcher ein Zugelement 3 aufnimmt, das beidseitig des Formteils 2 an der Schale 1 festlegbar ist. Das Zugelement 3 kann ein Seil oder Band aus Stahl, Kunststoff oder Leder sein, es kann aber auch auf andere Weise ausgeführt sein. Der eine Endbereich des Zugelements 3 ist mit einer Schlaufe 3a versehen, welche wahlweise an einer Nocke einer Reihe von Nocken 9, 9', 9" eingehängt werden kann. Die Nocken 9, 9', 9" sind außenseitig am Seitenbereich der Schale 1 so angeordnet, dass durch die Wahl der Nocke 9, 9', 9" die wirksame Länge des Zugelements 3 grob eingestellt bzw. verstellt werden kann, um eine Anpassung an unterschiedliche Hufgrößen vorzunehmen. Der zweite Endbereich des Zugelements 3 wird unterhalb eines Umlenkelements 13 geführt, welches am anderen Seitenbereich der Schale 1 vorgesehen ist. Mit diesem Ende ist das Zugelement 3 an einem etwa U-förmig ausgeführten Spannteil 4 federnd festgelegt. Das Spannteil 4 ist durch Abstützung an Stützauflagen 12, die an der Schale 1 ausgebildet sind, in eine Übertotpunktlage klappbar. Fig. 1 und 2 zeigen diese Stellung des Spannteiles 4.

Die Befestigung des Zugelements 3 am Spannteil 4 erfolgt unter Zwischenschaltung einer Feder 11 derart, dass das Zugelement 3 in seiner Länge in einem gewissen Bereich elastisch veränderbar ist. Dabei ist vorgesehen, die Vorspannung der Feder 11 über eine Schraube 10 einstellen zu können, um die Härte der Feder 11 und den zur Verfügung stehenden Federweg zu ändern. Dies gestattet die Feineinstellung des Zugelements 3 zur Anpassung des Hufschuhs an den betreffenden Pferdehuf. Über eine oder mehrere Markierung(en) 18 kann die eingestellte Vorspannung abgelesen werden. Die Markierungen können in Form von Zahlen, Symbolen, farbigen Flächen usw. gestaltet sein.

Zum Anlegen des erfindungsgemäßen Hufschuhs wird bei gelöstem Spannteil 4, und bei insbesondere eingehängt verbleibendem zweiten Zugelementende, die Rückwand 6 mitsamt dem Formteil 2 nach rückwärts geklappt, sodass nun der Huf 17 des Pferdes problemlos in der Schale 1 positioniert werden kann. Nun wird die Rückwand 6 mitsamt dem Formteil 2 nach vorne geklappt, bis das Formteil 2 in der Einbuchtung 16 des Pferdehufes 17 eingreift. Das Zugelement 3 wird unterhalb des Umlenkelementes 13 positioniert und es wird das Spannteil 4 unter Abstützung an den Stützauflagen 12 in seine geschlossene Lage gespannt bzw. geklappt. Nun kann, falls erforderlich, über die Schraube 10 die Vorspannung der Feder 11 geändert und derart eine Feineinstellung vorgenommen werden.

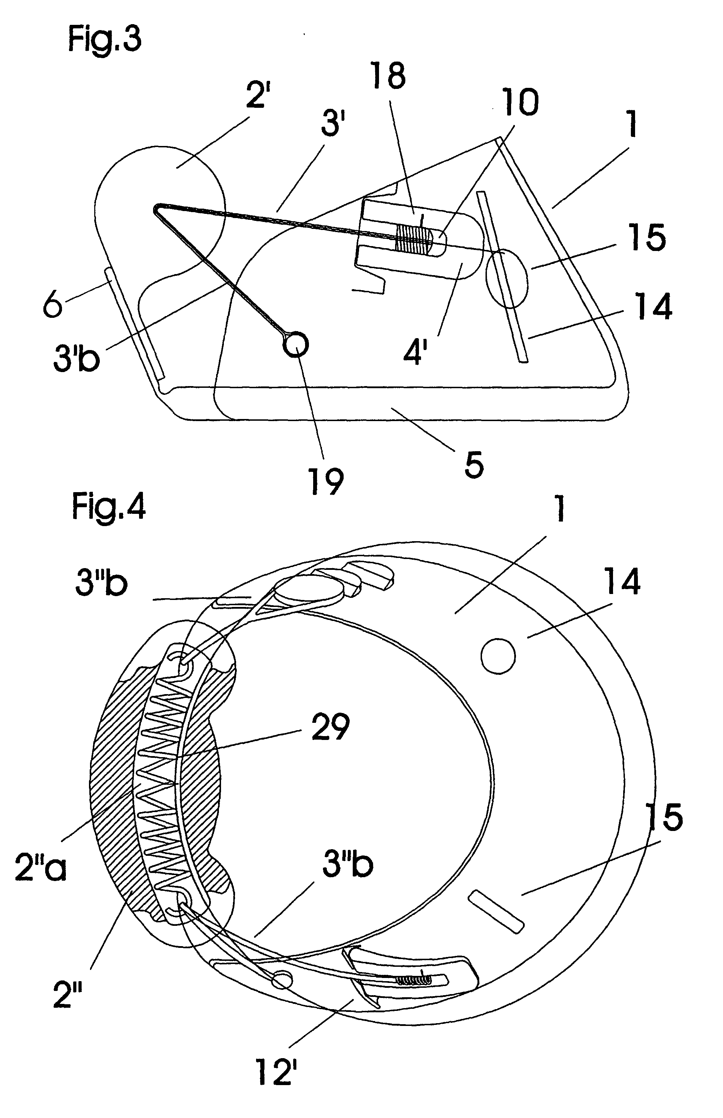

Bei der in Fig. 3 gezeigten Ausführungsform sind die Schale 1, das Bodenteil 5 und die Rückwand 6 übereinstimmend zur ersten Ausführungsform ausgeführt. Das Zugelement 3' ist hier nicht durch das Formteil 2' durchgeführt, sondern es besteht aus zwei Zugelementteilen 3'b, die jeweils seitlich am Formteil 2', beispielsweise an einem bei der Herstellung eingebundenen oder einem nachträglich in das Formteil 2' eingebrachten, nicht dargestellten Halteteil angeordnet sind. Fig. 3 zeigt lediglich das eine Zugelementteil 3'b. Das zweite, nicht gezeigte Zugelementteil 3'b kann seitlich am Halteteil des Formteils 2' befestigt sein und in zu Fig. 2 analoger Weise an der Schale 1 festlegbar sein.

Das in Fig. 3 gezeigte Zugelementteil 3'b ist am nicht dargestellten Halteteil des Formteiles 2' beweglich geführt. Die für die beiden Enden des Zugelementteiles 3'b vorgesehenen Befestigungsstellen sind bei geschlossenem Hufschuh gegenüber der Anlenkstelle am Formteil 2' schräg nach vorne und gleichzeitig nach unten versetzt, die eine, hier fixe Befestigungsstelle 19 ist gegenüber dem über Stützauflagen 12' schließbaren Spannteil 4' nach rückwärts und nach unten versetzt. Dies gewährleistet bei gespanntem Zugelement 3' Kräfteverhältnisse, die für einen guten und sicheren Halt des Hufschuhs am Huf besonders vorteilhaft sind.

Die Festlegung des Zugelementteiles 3'b am Spannteil 4' erfolgt bevorzugt auf die in Fig. 1 gezeigte Weise.

Für einen besonders komfortablen und spielfreien Sitz des Hufes im Hufschuh kann das Formteil 2' gemeinsam mit zwei seitlich vorne an der Innenseite der Schale 1 angeordnete Auflagen 14, 15 eine Art 3-Punkt-Auflage bilden. Die Auflagen 14 sind bei der in Fig. 3 gezeigten Ausführungsform Stützrippen bzw. Stütznoppen aus einem haltbaren, elastischen Material, beispielsweise Gummi oder Kunststoff.

Fig. 4 zeigt eine Ausführungsform eines Hufschuhs, bei der bei einer ansonsten zu Fig. 1 und Fig. 2 übereinstimmender Ausführung eine besondere Anordnung eines zweigeteilten Zugelementes 3" am Formteil 2" vorgesehen ist. In einer das Formteil 2' durchsetzenden Öffnung 2"a ist ein Federelement 29 angeordnet, welches, wie dargestellt, eine schraubenförmig ausgeführte Zugfeder sein kann. Das Federelement 29 kann jedoch auch ein gummielastisches Band oder Ähnliches sein.

Die beiden Zugelementteile 3"b sind jeweils am Federelement 29 festgelegt, beispielsweise eingehängt. Zusätzlich ist auch bei dieser Ausführungsform eine 3-Punkt-Auflage für den Huf vorgesehen, wobei die beiden vorderen Auflagen 14, 15 polsterartig ausgeführt sind.

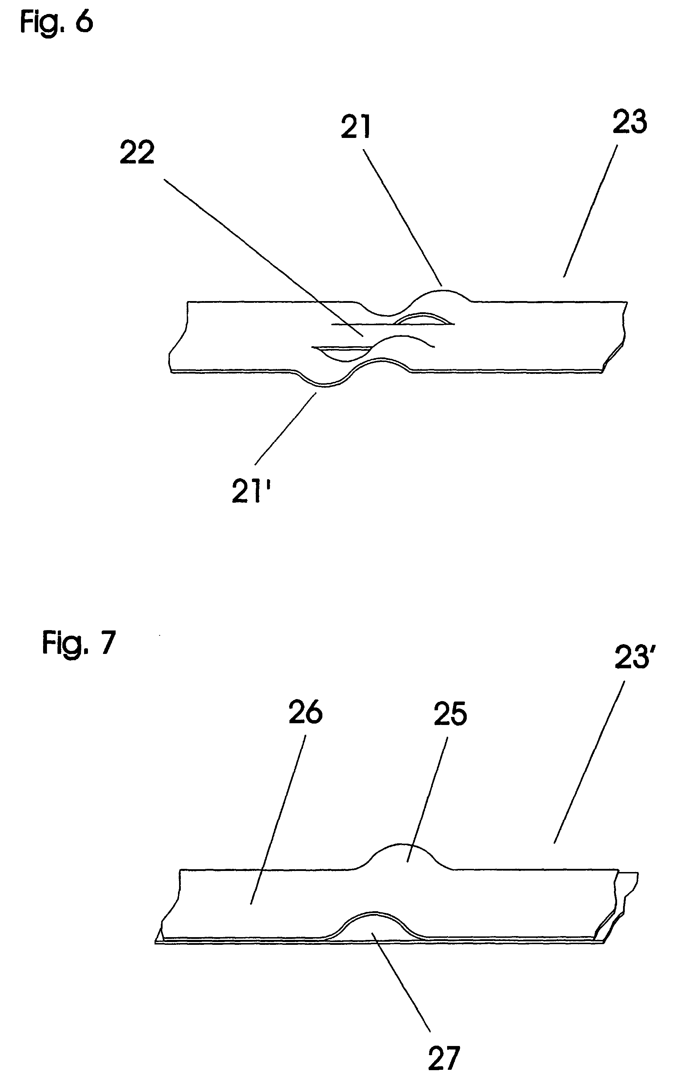

Fig. 6 und 7 zeigen Varianten von federnden Zugelementen 23, 23', welche einen progressiven Kraftanstieg aufweisen. Dargestellt ist jeweils das erfindungsgemäß ausgeführte Längsstück des Zugelements 23, 23'. Die Zugelemente 23, 23' können anstelle der bereits beschriebenen Zugelemente verwendet werden.

Bei der in Fig. 6 gezeigten Ausführung ist das Zugelement 23 einlagig ausgeführt und mit einem federnden Abschnitt aus drei durch kurze Schnitte getrennten Segmenten 21, 21', 22 versehen. Das Zugelement 23 kann solange gegen die Federkraft des mittleren Segmentes 22 gespannt werden bis die vorerst noch Schlaufen bildenden äußeren Segmente 21, 21' ebenfalls gespannt sind und sich die Federkräfte der drei Segmente 21, 21', 22 addieren.

Das Federelement 23' gemäß Fig. 7 besteht zumindest im Bereich seines federnden Abschnittes aus zwei bandartigen Segmenten 27, 26, die derart zusammengefügt sind, dass das eine Segment 26 über eine kurze Längsstreckung eine lockere, nicht verbundene Schlaufe 25 bildet. Es wird daher bei einer Zugkraft zuerst nur das kürzere Segment 27 gespannt bis die Schlaufe 25 verschwindet und sich die Federkräfte beider Segmente 26, 27 addieren.

Bei beiden Ausführungsformen können die Segmente 26, 27 aus dem gleichen Material oder aus verschiedenen Materialien, insbesondere aus solchen mit unterschiedlichem Federverhalten, bestehen.

Die Erfindung ist auf die dargestellten Ausführungsformen nicht eingeschränkt. Insbesondere kann das Formteil, ohne eine Befestigung an einer Rückwand oder dergleichen, verwendet werden. Das Zugelement selbst kann, etwa durch Verwendung eines entsprechenden Materials, federnd ausgeführt sein. Die Schale kann zum Erleichtern des Anlegens des Hufschuhs mit seitlich wegklappbaren Seitenteilen versehen werden. Es ist ferner möglich, bei der in Fig. 4 gezeigten Variante auf eine federnde Festlegung des Zugelementes am Spannteil zu verzichten. Die Feineinstellung der Zugelementlänge kann auf andere Weise erfolgen, ebenso die Festlegung des Zugelementes auf der anderen Seite der Schale. Das Formteil kann aus einem beliebigen, möglichst haltbaren elastischen Material bestehen und kann auf geeignete Weise an der wegklappbaren Rückwand befestigt werden.

## Patentansprüche

1. Hufschuh für den Huf eines Tieres, insbesondere eines Pferdes, mit einer Schale mit einer austauschbaren Sohle und mit einem zum Anlegen des Hufschuhs weg bewegbaren Teil, welches mittels zumindest eines Zugelementes an der Schale festlegbar ist und welches eine in der anatomischen Einbuchtung oberhalb des Hufes positonierbare Polsterung aufweist.
**dadurch gekennzeichnet,**
**dass** das oder zumindest eines der Zugelemente (3, 3', 3", 23, 23') federnd ausgeführt ist und / oder an der Schale (1) auf gefederte Weise geführt und / oder festlegbar ist.

2. Hufschuh nach Anspruch 1, **dadurch gekennzeichnet, dass** die Vorspannung von mindestens einem Zugelement (3, 3', 3", 23, 23') an einer Einstellskala mittels Zahlen, Symbolen, Farben etc. ablesbar ist.

3. Hufschuh nach Anspruch 1 oder 2, **dadurch gekennzeichnet, dass** das Zugelement (3, 3', 3", 23, 23') mit zumindest einem federnden Element verbunden ist oder zumindest einen federnden Abschnitt aufweist.

4. Hufschuh nach einem der Ansprüche 1 bis 3, **dadurch gekennzeichnet, dass** das federnde Element oder der federnde Abschnitt des Zugelements (3, 3', 3", 23, 23') eine progressiv ansteigende Federcharakteristik aufweist.

5. Hufschuh nach einem der Ansprüche 1 bis 4, **dadurch gekennzeichnet, dass** der federnde Abschnitt des Zugelements (23, 23') zumindest ein kurzes, insbesondere federndes Segment (22, 27) und zumindest ein weiteres, auf diesem angeordnetes, längeres, und insbesondere nicht bzw. geringfügig federndes Segment (21, 21', 25) aufweist.

6. Hufschuh nach einem der Ansprüche 1 bis 5, **dadurch gekennzeichnet, dass** zumindest einer der Endbereiche des Zugelements (3, 3', 3") an der Schale (1) unter Zwischenschaltung einer in ihrer Vorspannung veränderbaren Feder (11) festlegbar ist.

7. Hufschuh nach einem der Ansprüche 1 bis 6, **dadurch gekennzeichnet, dass** das Zugelement (3, 3") zumindest an der einen Seite der Schale (1) bzw. eines die Polsterung bildenden oder aufweisenden Formteils (2') über zumindest ein, insbesondere federnd befestigtes oder ausgeführtes Umlenkelement (13) führbar ist.

8. Hufschuh nach einem der Ansprüche 1 bis 7, **dadurch gekennzeichnet, dass** das Zugelement (3, 3', 3") durch ein die Polsterung bildendes oder aufweisendes Formteil (2, 2") geführt ist oder, zweiteilig ausgeführt, am Formteil (2') befestigt ist oder ein Federelement (29) aufweist, welches insbesondere innerhalb des Formteiles (2") verläuft.

9. Hufschuh nach einem der Ansprüche 1 bis 8, **dadurch gekennzeichnet, dass** das Formteil (2, 2', 2") gemeinsam mit zwei seitlich vorne an der Innenseite der Schale (1) angeordneten insbesondere aus elastischen Material bestehenden und rippen- oder polsterförmig ausgeführten Auflagen (14, 15) eine 3-Punkt-Auflage für den Huf bildet.

10. Hufschuh nach einem der Ansprüche 1 bis 9, **dadurch gekennzeichnet, dass** das Zugelement (3, 3', 3") zumindest einseitig für ein Spannen in Richtung nach vorne und nach unten bzw. schräg in Richtung nach vorne und unten geführt ist und vorzugsweise zumindest eines der Enden des Zugelements (3, 3') in unterschiedlichen Positionen an der Schale festlegbar, beispielsweise einhängbar, ist.

## Claims

1. A hoof shoe for an animal hoof, particularly a horse's hoof, including a shell with a replaceable sole and with a member that can be retracted for applying the hoof shoe, which member can be secured to the shell via at least one pulling element and has a padding that can be positioned in the anatomical indentation above the hoof,
**characterised in that**
the one or at least one of several pulling elements (3, 3', 3", 23, 23') is constructed as a spring and /or is placed and /or secured under spring loading on the hoof.

2. The hoof shoe according to claim 1,
**characterised in that**
the pretension with which at least one of the pulling elements (3, 3', 3", 23, 23') is loaded can be read from an adjustment scale by means of numbers, symbols, colours, etc..

3. The hoof shoe according to either of claims 1 or 2,
**characterised in that**
the pulling element (3, 3', 3", 23, 23') is connected with at least one spring-loaded element or at least one spring-loaded section.

4. The hoof shoe according to any of claims 1 to 3,
**characterised in that**
the spring-loaded element or the spring-loaded section of the pulling element (3, 3', 3", 23, 23') has a progressively increasing spring characteristic.

5. The hoof shoe according to any of claims 1 to 4,
**characterised in that**
the spring-loaded section of the pulling element (23, 23') has at least one short, particularly springy segment (22, 27) and at least one additional segment (21, 21', 25) arranged thereon that is longer and that particularly has little or no spring tension.

6. The hoof shoe according to any of claims 1 to 5,
**characterised in that**
at least one of the end areas of the pulling element (3, 3', 3") can be secured to the shell (1) by insertion therebetween of a spring (11) the pretension of which is adjustable.

7. The hoof shoe according to any of claims 1 to 6,
**characterised in that**
the pulling element (3, 3') can be guided on at least one side of the shell (1) or of a structural element (2') forming or including the padding by at least one redirecting element (13) attached or designed in spring-loaded manner.

8. The hoof shoe according to any of claims 1 to 7,
**characterised in that**
the pulling element (3, 3', 3") is guided by a structural element (2, 2') forming or including the padding, or when constructed in two parts, is secured to the structural element (2') or has a spring element (29) that particularly extends inside the structural element (2').

9. The hoof shoe according to any of claims 1 to 8,
**characterised in that**
the structural element (2, 2', 2") forms a 3-point support for the hoof in conjunction with two supports (14, 15) that are arranged laterally at the front and inside of the shell (1) and are particularly made from elastic material and are constructed in the form of ribs or cushions.

10. The hoof shoe according to any of claims 1 to 9,
**characterised in that**
the pulling element (3, 3', 3") on at least one side is guided forwards and downwards or in a direction inclined forwards and downwards for tightening and preferably at least one of the ends of the pulling element (3, 3') can be secured, for example hooked, in various positions on the shell.

## Revendications

1. Hipposandale pour le sabot d'un animal, notamment un cheval, comportant une coque dotée d'une sole interchangeable et d'une partie amovible pour fixer l'hipposandale, laquelle est fixable à la coque au moyen d'au moins un élément élastique et laquelle présente un rembourrage positionné dans le creux anatomique au dessus du sabot,
**caractérisée en ce que** l'élément élastique ou au moins un des éléments élastiques (3,3',3", 23, 23') est configuré de manière à faire ressort et/ou peut être fixé et/ou appliqué sur la coque (1) de manière à faire ressort.

2. Hipposandale selon la revendication 1, **caractérisée en ce que** la prétension d'au moins un élément élastique (3, 3' , 3" , 23, 23') peut être lue sur une échelle de réglage au moyen de chiffres, symboles, couleurs, etc.

3. Hipposandale selon la revendication 1 ou 2,
**caractérisée en ce que** l'élément élastique (3,3',3", 23, 23') est relié à au moins un élément faisant ressort ou présente au moins une portion faisant ressort.

4. Hipposandale selon une des revendications 1 à 3,
**caractérisée en ce que** l'élément faisant ressort ou la portion faisant ressort de l'élément élastique (3, 3' 3' ' 23, 23') présente une caractéristique d'élasticité qui augmente progressivement.

5. Hipposandale selon une des revendications 1 à 4,
**caractérisée en ce que** la portion faisant ressort de l'élément élastique (23,23') présente au moins un segment court, fortement élastique (22,27) et au moins un autre segment long, disposé sur ce dernier et notamment non, respectivement moins élastique (21,21',25).

6. Hipposandale selon une des revendications 1 à 5,
**caractérisée en ce que** au moins une des zones d'extrémité de l'élément élastique (3,3',3" ) est fixable à la coque (1) en interposant un ressort (11) dont la prétension peut être modifiée.

7. Hipposandale selon une des revendications 1 à 6,
**caractérisée en ce que** l'élément élastique (3,3") peut être appliqué au moins sur un des côtés de la coque (1), respectivement d'un élément moulé (2') formant ou présentant le rembourrage par au moins un élément d'enroulement (13) configuré ou fixé de manière fortement élastique.

8. Hipposandale selon une des revendications 1 à 7,
**caractérisée en ce que** l'élément élastique (3,3',3") est appliqué par l'entremise d'un élément moulé (2,2") formant ou présentant le rembourrage ou, lorsqu'il est configuré en deux parties, fixé sur l'élément moulé (2') ou présente un élément de ressort (29), lequel s'étend notamment à l'intérieur de l'élément moulé (2").

9. Hipposandale selon une des revendications 1 à 8,
**caractérisée en ce que** l'élément moulé (2,2',2'') forme, conjointement avec deux doublures (14,15) disposées sur les côtés à l'avant du côté interne de la coque (1), constituées notamment de matériau élastique et configurées en forme de nervures ou de coussinets, une doublure à 3 points pour le sabot.

10. Hipposandale selon une des revendications 1 à 9,
**caractérisée en ce que** l'élément élastique (3,3',3") est appliqué au moins d'un côté pour un serrage vers l'avant et par-dessous, respectivement en diagonale pour un serrage vers l'avant et par-dessous, et **en ce que**, de préférence, au moins une des extrémités de l'élément élastique (3,3') peut être fixée, par exemple suspendue, sur la coque à des positions différentes.
